# EUROPÄISCHE PATENTSCHRIFT

(11) **EP 2 314 469 B1**
(45) Veröffentlichungstag und Bekanntmachung des Hinweises auf die Patenterteilung: **19.12.2012**
(21) Anmeldenummer: 10013931.0
(22) Anmeldetag: 25.10.2010
(51) Int. Cl.: B60G 13/00

(54) **Lagerung für das freie Ende einer Stützstrebe**
Bearing for the free end of a support strut element
Support pour l'extrémité libre d'une de jambe de force

(30) Priorität: 26.10.2009 DE 102009050679
(43) Veröffentlichungstag der Anmeldung: 27.04.2011
(73) Patentinhaber: Goldhofer Aktiengesellschaft, 87700 Memmingen (DE)
(72) Erfinder: Merkel, Felix, 87700 Memmingen (DE)
(74) Vertreter: Lemke, Jörg-Michael

(56) Entgegenhaltungen:
- DE-A1- 3 210 905
- DE-A1- 19 625 106
- US-A1- 2006 049 562
- US-A1- 2008 012 263

## Beschreibung

Die Erfindung betrifft eine Lagerung für das freie Ende einer Stützstrebe, wie des oberen Endes des Zylinderaußenrohrs einer Achsausgleichs-Zylinder-Kolben-Einheit der Radaufhängung eines Achsaggregats, vorzugsweise eines Pendelachsaggregats für Schwerlastanhänger, welches Ende in einem Gegenlager der Radaufhängung, vorzugsweise eines Drehgestells des Achsaggregats, gehalten ist, während das freie Ende des Kolbens der Achsausgleichs-Zylinder-Kolben-Einheit an einer Achsschwinge angelenkt ist.

Es ist eine Lagerung dieser Bauart bekannt, bei welcher das obere Ende des Zylinderaußenrohrs ein Lagerauge aufweist, mit einem durch das Lagerauge unter Zwischenlage einer Buchse hindurchgesteckten Achsbolzen, dessen beide Enden in Gegenlagern der Radaufhängung, vorzugsweise eines Drehgestells des Achsaggregats, gehalten sind. Dabei ist die zwischen dem Achsbolzen und dem Lagerauge befindliche Buchse ein Radialgelenklager. Die beiden Enden des Achsbolzens werden dabei in Lagerbohrungen als Gegenlager aufgenommen. Derzeit erfolgt die Befestigung des oberen Endes der Ausgleichs-Zylinder-Kolben-Einheit auch häufig mittels einer Kugel.

Eine Lagerung nach dem Oberbegriff der Ansprüche 1 und 19 ist aus DE-A-32 10 905 bekannt.

Diese bekannte Lagerung erfordert eine laufende Wartung durch Schmierung und Überwachung auf Verschleißerscheinungen, nachdem diese Lagerung nicht spielfrei sein kann und im Laufe der Zeit unter anfallenden Stoßbelastungen sich ausschlagen muß, was insbesondere bei der Verwendung in Achsaggregaten durch die unvermeidlichen Fahrbahnstöße zwangsläufig ist. Die Lebensdauer der bekannten Lagerung ist somit recht begrenzt und das Erfordernis eines relativ frühzeitigen Austausches abzusehen, sowohl durch den Verschleiß des Radialgelenklagers einerseits als auch der Passungen zwischen Bohrungen und Achsbolzenenden andererseits. Die dabei anfallenden Montagearbeiten für Einbau und Ausbau sind wegen der komplizierten Bauart recht aufwendig.

Ferner beansprucht diese bekannte Bauart der Lagerung bei einem Pendelachsaggregat oberhalb des Endes der Stützstrebe bzw. des Zylinderaußenrohrs eine recht erhebliche Bauhöhe, die wegen der oberhalb der Lagerung angeordneten Lenkung der Radaufhängung entweder zu einer größeren Bauhöhe des Achsaggregats oder zu einer Verkürzung der Achsausgleichs-Zylinder-Kolben-Einheit zwingt, was beides von Nachteil ist.

Die der Erfindung zugrunde liegende Aufgabe wird nun darin gesehen, eine Lagerung der eingangs erläuterten Bauart zu schaffen, welche wartungs- und spielfrei ist, außerdem Federungs- und Dämpfungseigenschaften gegenüber anfallenden Stoßbelastungen aufweist, wegen ihrer einfacheren Bauweise einen geringeren Aufwand für Ein- und Ausbau erfordert, und vor allen Dingen die Möglichkeit schafft, die bei der bekannten Bauart insbesondere von Lagerauge und Buchse beanspruchte Bauhöhe entweder für eine Vergrößerung bzw. Verlängerung der Achsausgleichs-Zylinder-Kolben-Einheit und damit eine größere Hubhöhe des Kolbens bei unveränderter Bauhöhe des Achsaggregats, oder aber für eine Verringerung der Bauhöhe der letzteren, oder auch für beides gleichzeitig durch Aufteilung der gewonnenen Bauhöhe, zu nutzen. Ferner soll zusätzlicher Platz bzw. Bauraum geschaffen werden können, z. B. für Elemente der Lenkung des Achsaggregats.

Diese Aufgabe wird erfindungsgemäß dadurch gelöst, daß das Zylinderaußenrohr mit seinem Ende durch eine Öffnung im Gegenlager gesteckt ist,
daß ein einerseits am Zylinderaußenrohr und andererseits am Gegenlager angreifendes und einen größeren Durchmesser als die Öffnung aufweisendes ringförmiges Federungselement auf das Zylinderaußenrohr aufgeschoben ist, das aus einer gelochten oberen Federungsscheibe und einer gelochten unteren Federungsscheibe besteht, deren eine oberhalb und deren andere unterhalb des Gegenlagers an demselben unter einer vom Zylinderaußenrohr ausgeübten Vorspannung anliegt und die jeweils ein elastisches Material aufweisen, und daß das Ende des Zylinderaußenrohrs gegen ein Herausrutschen aus der Öffnung gesichert ist.

Durch dieses Federungselement wird die Lagerung wartungsfrei, da eine Schmierung entfällt. Gleichzeitig sorgt das Federungselement nicht nur für eine Abfederung auftretender Stoßbelastungen sondern auch für eine Dämpfung, und es macht ferner den bisher üblichen Blasenspeicher überflüssig.

Der Ein- und Ausbau der erfindungsgemäßen Lagerung ist wegen des Wegfalls der bei der bekannten Bauart vorhandenen Passungen und des Lagerauges erheblich einfacher. Vor allen Dingen wird durch die Erfindung unterhalb wichtiger Bauelemente des Achsaggregats, z. B. der Lenkung desselben, Platz geschaffen für das Ende des Zylinderaußenrohrs der Achsausgleichs-Zylinder-Kolben-Einheit und damit für eine größere Freiheit bezüglich der Auslegung der Konstruktion des Achsaggregats im aufgabengemäßen Sinne.

Schließlich lässt sich durch die Erfindung und den durch sie erzielten Bauhöhengewinn auch die Achsausgleichs-Zylinder-Kelben-Einheit gegenüber den bekannten Konstruktionen derart weit nach oben verlagern, dass die Beweglichkeit, insbesondere die Pendel fähigkeit, des bzw. der Reifen(s) des darunter angeordneten Rades erheblich größer sein kann als bei den bekannten Bauarten. Wenn auch für die Zulassung eines Fahrzeugs, z. B. für den Schwerlasttransport, nur eine Federung vorgeschrieben ist, nicht hingegen eine Dämpfung, so ist das Vorhandensein einer Dämpfung doch von erheblichem Vorteil.

Das Federungselement weist zweckmäßig elastisches Material auf, vorzugsweise Gummi. Zwar wäre auch die Verwendung von metallischen Federungselementen in Form von Scheiben- und/oder Schraubenfedern denkbar, doch sind dieselben wegen des vorhandenen Bruchrisikos und der auftretenden Reibung nicht Mittel der Wahl.

Bei einer ersten Ausführungsform der Erfindung weist das Ende des Zylinderaußenrohrs ein Außengewinde auf, auf das eine Mutter zur Halterung des Zylinderaußenrohrs in der Öffnung des Gegenlagers aufgeschraubt ist, wobei die Mutter an der oberen Federungsscheibe anliegt und die genannte Vorspannung auf die Federungsscheiben und deren Anlage am Gegenlager ausübt. Dabei kann die Mutter, wenn sie als Topfmutter ausgebildet ist, auch gleich vorteilhaft die abschließende obere Stirnwand des Zylinderaußenrohrs bilden.

Zweckmäßig werden dabei vor dem Aufschrauben der Mutter die Federungsscheiben mit jeweils einer in ihrem Innendurchmesser dem Außendurchmesser des Zylinderaußenrohrs mit Spiel entsprechenden Durchbrechung unter Zwischenlage des Gegenlagers auf das Ende des Zylinderaußenrohrs aufgeschoben, und im Abstand vom Ende (3a, 3b) ist ein einstückiger Bund (18) am Umfang des Zylinderaußenrohrs (4a, 4b) angeordnet, welcher ein Widerlager für die nach ihrem Aufschieben an der Unterseite des Gegenlagers anliegende untere Federungsscheibe bildet.

Dieser Bund kann vorteilhaft am Zylinderaußenrohr einstückig angeformt sein.

Die Federungsscheiben können spiegelbildlich gleich geformt sein, sie können jedoch erforderlichenfalls auch unterschiedlich ausgebildet werden.

Bei dieser ersten Ausführungsform ist das Gegenlager von einer die Öffnung aufweisenden Lagerscheibe gebildet, die im Bereich ihres Umfangs an einer Unterseite eines plattenförmigen Supports der Radaufhängung befestigt und vorzugsweise verschraubt ist, der seinerseits eine Durchbrechung aufweist, durch die das Ende ebenfalls hindurchragt, wobei die Durchbrechung wie die Öffnung groß genug ist, um beim Ein- und Ausfedern der Achsschwinge der Radaufhängung und einem entsprechenden Verschwenken der Anlenkung des freien Endes des Kolbens der Achsausgleichs-Zylinder-Kolben-Einheit entsprechende Schwenkbewegungen des Endes des Zylinderaußenrohrs im Gegenlager zu gewährleisten.

Von besonderem Vorteil ist es dabei, wenn das elastomere Federungselement im Wesentlichen die Form einer Ellipse aufweist. Diese Form eröffnet die Möglichkeit, dieses elliptische Federungselement derart zwischen Gegenlager und Zylindcraußenrohr anzuordnen, dass der kleinere Durchmesser der Ellipse in Richtung der Schwcnkbewcgungen der Achsausgleichs-Zylinder-Kolben-Einheit beim Ein- und Ausfedern der Radaufhängung bzw. der Achsschwinge gerichtet ist. Dadurch befindet sich in jeweils denjenigen Bereichen des Federungselements, die beim Verschwenken der Achsausgleichs-Zylinder-Kolben-Einheit einer ausgeprägten Quetschung unterliegen, weniger elastisches Material, das dem Verschwenken einen Widerstand entgegensetzt. Gleichwohl ist eine einwandfreie Dämpfung dadurch gewährleistet, dass im Bereich des längeren Durchmessers der Ellipse genügend am Gegenlager und an der Lagerscheibe anliegendes Elastomermaterial zum Abfedern und zur Stoßabsorption zur Verfügung steht.

Bei einer zweiten Ausführungsform wird das Gegenlager von einer die Öffnung aufweisenden Lagerbüchse gebildet, die im Bereich ihres Umfangs an einer Unterseite eines Supports der Radaufhängung befestigt ist und in der das Zylinderaußenrohr koaxial geführt ist, wobei der Support ebenfalls eine Durchbrechung aufweist, durch die das Ende des Zylinderaußenrohrs hindurchragen kann. Dabei ist zur Verbindung des freien Endes des Kolbens der Achsausgleichs-Zylinder-Kolben-Einheit mit der Achsschwinge eine Pleuelstange vorgesehen, die einerseits am Kolben und andererseits an der Achsschwinge angelenkt ist und beim Ein- und Ausfedern der Achsschwinge ein erforderliches Verschwenken der Anlenkung der Pleuelstange an der Achsschwinge relativ zur Anlenkung der Pleuelstange am Kolben gewährleistet.

Auch hier kann vorzugsweise die Lagerbüchse mit dem Support verschraubt sein.

Da bei dieser Ausführungsform das Zylinderaußenrohr in der Lagerbüchse koaxial geführt ist, wird durch die Pleuelstange eine Möglichkeit für die Anlenkung an der Achsschwinge geschaffen, bei einer Bewegung der letzteren derselben zu folgen.

Eine solche Bewegung des Anlenkpunktes der Pleuelstange bei dieser zweiten Ausführungsform wie auch des Anlenkpunktes der jeweiligen Kolbenstange bei der ersten und der zweiten Ausführungsform beträgt etwa -4 bis etwa +4 Winkelgrade um eine angenommene Neutrallage.

Auch bei der zweiten Ausführungsform ist das Federungselement aus zwei Federungsscheiben gebildet, deren eine oberhalb und deren andere unterhalb des Gegenlagers, also hier der Lagerbüchse, an demselben bzw. derselben unter Vorspannung seitens der Topfmutter anliegt. Diese Federungsscheiben können wieder spiegelbildlich gleich geformt sein, sie können jedoch auch unterschiedlich ausgebildet sein.

Auch hier können die Federungsscheiben jeweils mit einander gegenüberliegenden Bunden aus gummielastischem Material in den Ringspalt zwischen den Enden und dem Innenumfang der Öffnung der Lagerbüchse ragen.

Die Federungselemente können mehrschichtig ausgebildet sein, wobei die Mehrschichtigkeit von abwechselnden Lagen aus gummielastischem Material und Metall bestehen kann, und die Schichten bzw. Lagen gegebenenfalls durch Vulkanisation miteinander verbunden sein können. Diese Ausgestaltungen dienen der Versteifung und erhöhen jeweils die Tragfähigkeit der Federungselemente. Für das elastische Material wird in der Regel Gummi und für das Metall Stahl gewählt, wobei das elastische Material durch Gewebe-oder Gewirklagen verstärkt werden kann. Es versteht sich, dass als elastisches Material außer Gummi auch anderweitige elastische Materialien dienen können, beispielsweise solche, die aus Kunststoff-Elastomeren bestehen.

Bei der ersten Ausführungsform nimmt das vorhandene Spiel zwischen der Außenfläche des Zylinderaußenrohrs und dem inneren Umfang der Federungsscheiben zweckmäßig von deren gemeinsamer Mittelebene zu ihren jeweiligen Endflächen hin zu, was die beim Einfedern des Radsatzes erforderliche Schwenkbewegung der Achsausgleichs-Zylinder-Kolben-Einheit erleichtert. Bei der zweiten Ausführungsform ist eine unterschiedliche Ausbildung des genannten Spiels weniger bedeutsam, da es wegen der vorhandenen Pleuelstange an dem Erfordernis eines Verschwenkens der Zylinder-Kolben-Paarung selber fehlt.

Es ist zu betonten, daß es sich bei den beiden beschriebenen Ausführungsbeispielen um bevorzugte Ausführungsformen handelt, die sich im Rahmen der Erfindung noch dadurch vereinfachen lassen, daß die jeweils obere Federungsseheibe weggelassen wird, wo dies mechanisch vertretbar ist, was zu nicht gezeigten vereinfachten dritten und vierten Ausführungsbeispielen führt. Ist dabei die Mutter eine Topfmutter, dann wird zweckmäßig eine axiale Höhe deren Gewindes gewählt, die der Bauhöhe der Topfmutter plus der Bauhöhe der oberen Federungsscheibe in den oben beschriebenen ersten und zweiten Ausführungsformen im Wesentlichen entspricht. Natürlich lässt sich auch eine einfache Ringmutter verwenden, wenn das Ende der Zylinderaußenrohre in üblicher Weise von vorneherein geschlossen ist. Die axiale Bauhöhe der Ringmutter kann erheblich geringer sein, da es ja nur von der Bauhöhe bzw. axialen Erstreckung des jeweiligen Außengewindes auf dem Ende 3a, 3b des Zylinderaußenrohrs 4a oder 4b abhängt, wie weit sich die Ringform aufweisende Mutter auf dieses Ende aufschrauben lässt, natürlich immer in Abhängigkeit von der Lage des Bundes und der axialen Erstreckung der dann als einziges Federungselement verwendeten unteren Federungsscheibe. Dies immer unter Berücksichtigung des Umstands, daß das Ende des Zylinderaußenrohrs sich erfindungsgemäß durch das Gegenlager hindurch sich in den Raum oberhalb desselben zu erstrecken hat.

Bei diesen nicht gezeigten dritten und vierten Ausführungsformen belässt man zweckmäßig einen axialen Abstand zwischen der Mutter und dem Gegenlager, um bei der dritten Ausführungsform die Schwenkbewegung des Zylinderaußenrohrs nach Maßgabe des Ein- und Ausfederns der Achsschwinge der Radaufhängung zu erleichtern. Dadurch entfällt eine Vorspannung des Federelements bzw. der Federungsscheibe. Ebenso verfährt man zweckmäßig auch bei der vierten Ausführungsform, auch wenn dort keine Auslenkung erfolgt, weil das Zylinderaußenrohr dort in der als Gegenlager verwendeten Büchse koaxial geführt ist.

Allgemein lässt sich feststellen, dass die Lagerung nach der Erfindung auch kostengünstiger herzustellen ist, da es sich bei ihr im Gegensatz zu den bekannten Konstruktionen weitgehend um eine rotationssymmetrische Bauweise handelt. Ferner macht die Erfindung auch den zur Abfederung kurzer, kleiner Stöße bisher üblichen sogenannten Blasenspeicher überflüssig, in welchem Hydrauliköl der Achsausgleichs-Zylinder-Kolben-Einheit eine Membran gegen unter Vorspannung stehenden Stickstoff verlagern konnte und dadurch eine Federung bewirkte.

Die Erfindung wird im Folgenden unter Bezugnahme auf die beigefügten Zeichnungen anhand bevorzugter Ausführungsformen näher erläutert.

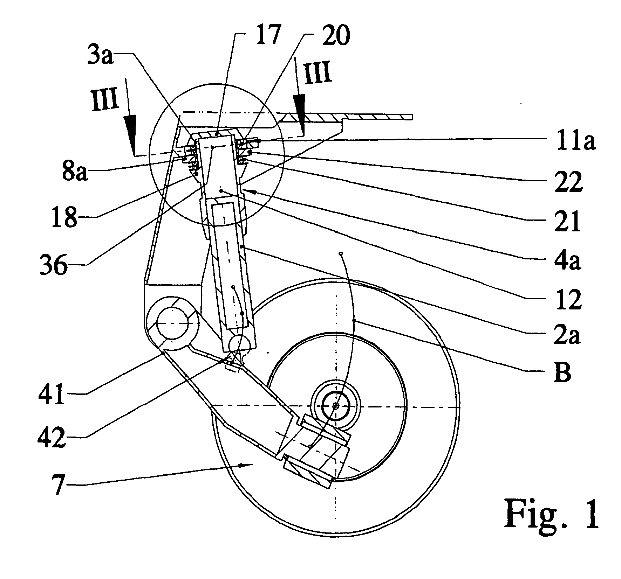

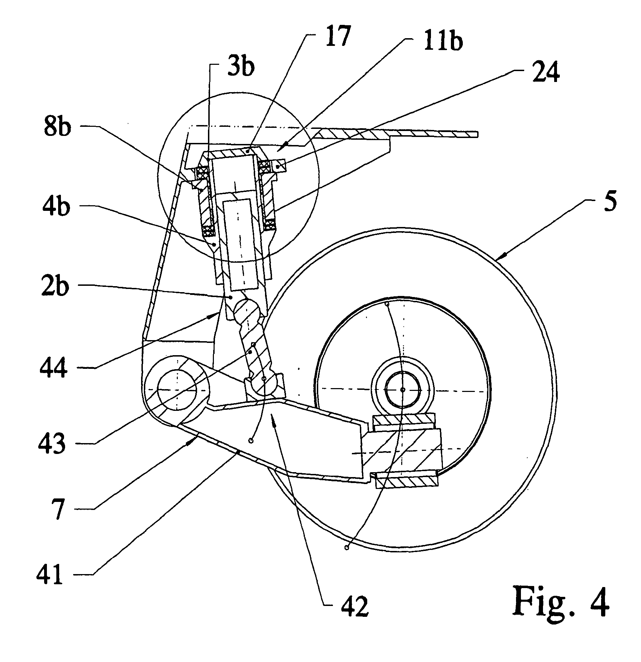

Es zeigt:
Fig. 1
   eine Seitenansicht im Schnitt einer ersten Ausführungsform einer erfindungsgemäßen Lagerung, eingebaut in das Drehgestell eines Achsaggregats, zur Halterung des freien Endes des Zylinderaußenrohrs einer Achsausgleichs-Zylinder-Kolben-Einheit, die gleichzeitig der Federung des Radsatzes des Achsaggregats dient;
Fig. 2
   eine Vergrößerung des Kreisausschnitts in Fig. 1;
Fig. 3
   einen Schnitt durch ein Federungselement entsprechend der Linie III-III in Fig. 1.
Fig. 4
   eine der Fig. 1 entsprechende Seitenansicht im Schnitt einer zweiten Ausführungsform der erfindungsgemäßen Lagerung;
Fig. 5
   eine Vergrößerung des Kreisausschnitts in Fig. 4.

Die erfindungsgemäße Lagerung 1 für das freie Ende einer Stützstrebe wird im Folgenden anhand zweier Ausführungsbeispiele von jeweils in den Fig. 1 und 2 bzw. 4 und 5 dargestellten Achsaggregaten dargestellt. In beiden Fällen handelt es sich um eine Lagerung 1 für das freie Ende einer Stützstrebe, wie des oberen Endes 3a, 3b des Zylinderaußenrohrs 4a, 4b einer Achsausgleichs-Zylinder-Kolben-Einheit 6a, 6b der Radaufhängung 7 eines Achsaggregats für Fahrzeuge, wie eines Pendelachsaggregats für Schwerlastanhänger, welches Ende 3a, 3b in einem Gegenlager 8a, 8b der Radaufhängung 7, wie eines Drehgestells 14 des Achsaggregats, gehalten ist, während das freie Ende des Kolbens 2a, 2b der Achsausgleichs-Zylinder-Kolben-Einheit 6a, 6b an einer Achsschwinge 41 angelenkt ist.

Erfindungsgemäß ist nun das Zylinderaußenrohr 4a, 4b mit seinem Ende 3a, 3b durch eine Öffnung 10a, 10b im Gegenlager 8a, 8b gesteckt, und es ist ein einerseits am Zylinderaußenrohr 4a, 4b und andererseits am Gegenlager 8a, 8b angreifendes und einen größeren Durchmesser als die Öffnung 10a, 10b aufweisendes ringförmiges Federungselement 11a, 11b auf das Zylinderaußenrohr aufgeschoben, das aus einer gelochten oberen Federungsscheibe 20 und einer gelochten unteren Federungsscheibe 21 besteht, deren eine oberhalb und deren andere unterhalb des Gegenlagers 8a, 8b an demselben unter einer vom Zylinderaußenrohr 4a, 4b ausgeübten Vorspannung anliegt und die jeweils ein elastisches Material aufweisen, und das Ende 3a, 3b des Zylinderaußenrohrs 4a, 4b ist gegen ein Herausrutschen aus der Öffnung 10a, 10b gesichert.

Das Ende 3a, 3b des Zylinderaußenrohrs 4a, 4b weist ein Außengewinde auf, auf das eine Topfmutter 17 zur Halterung des Zylinderaußenrohrs 4a, 4b in der Öffnung 10a, 10b des Gegenlagers 8a, 8b aufgeschraubt ist. Dabei liegt die Topfmutter an der oberen Federungsscheibe an und übt die genannte Vorspannung auf die Federungsscheiben (20, 21) und deren Anlage am Gegenlager (8a, 8b) aus.

Ferner bildet die Topfmutter 17 vorteilhaft die abschließende Stirnwand des Zylinderaußenrohrs 4a. Zwar wird diese Ausgestaltung der Befestigung des Endes 3a bevorzugt, doch sind auch anderweitige Ausgestaltungen der Befestigung einsetzbar, z. B. mittels stirnseitiger Verschraubung, etc.

Vor dem Aufschrauben der Topfmutter 17 werden die Federungsscheiben 20, 21 mit jeweils einer in ihrem Innendurchmesser dem Außendurchmesser des Zylinderaußenrohrs 4a, 4b mit Spiel entsprechenden Durchbrechung unter Zwischenlage des Gegenlagers 8a, 8b auf das Ende 3a, 3b des Zylinderaußenrohrs 4a, 4b aufgeschoben, und im Abstand vom Ende 3a, 3b ist ein einstückiger Bund 18 am Umfang des Zylinderaußenrohrs 4a, 4b angeordnet, welcher ein Widerlager für die nach ihrem Aufschieben an der Unterseite des Gegenlagers 8a, 8b anliegende untere Federungsscheibe 21 bildet.

Die zwei Federungselemente (20, 21) sind im Wesentlichen spiegelbildlich gleich geformt.

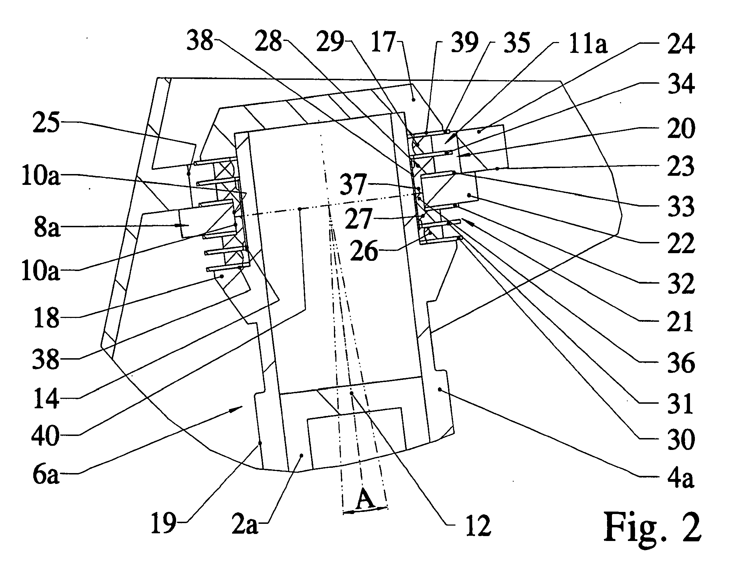

Bei der ersten Ausführungsform gemäß den. Fig. 1 und 2 ist das Gegenlager 8a von einer die Öffnung l0a aufweisenden Lagerscheibe 22 gebildet ist, die im Bereich ihres Umfangs an einer Unterseite 23 eines Supports 24 der Radaufhängung 7 befestigt ist, der seinerseits eine Durchbrechung 25 aufweist, durch die das Ende 3a des Zylinderaußenrohrs 4a) ebenfalls hindurchragt, wobei die Durchbrechung 25 wie die Öffnung 10a groß genug ist, um beim Ein- und Ausfedern der Achsschwinge 41 der Radaufhängung 7 und einem entsprechenden Verschwenken der Anlenkung 42 des freien Endes des Kolbens 2a der Achsausgleichs-Zylinder-Kolben-Einheit 6a entsprechende Schwenkbewegungen des Endes 3a des Zylinderaußenrohrs 4a im Gegenlager 8a zu gewährleisten.

Die bei dieser Ausführungsform gezeigte Ausbildung der Federungsscheiben 20 und 21 ist nicht zwingend, dieselben könnten zur Anpassung an besondere Raumverhältnisse oder gewünschte Federungs- und/oder Dämpfungseigenschaften auch unterschiedlich bezüglich z. B. ihrer Größe, Dicke etc. ausgebildet sein.

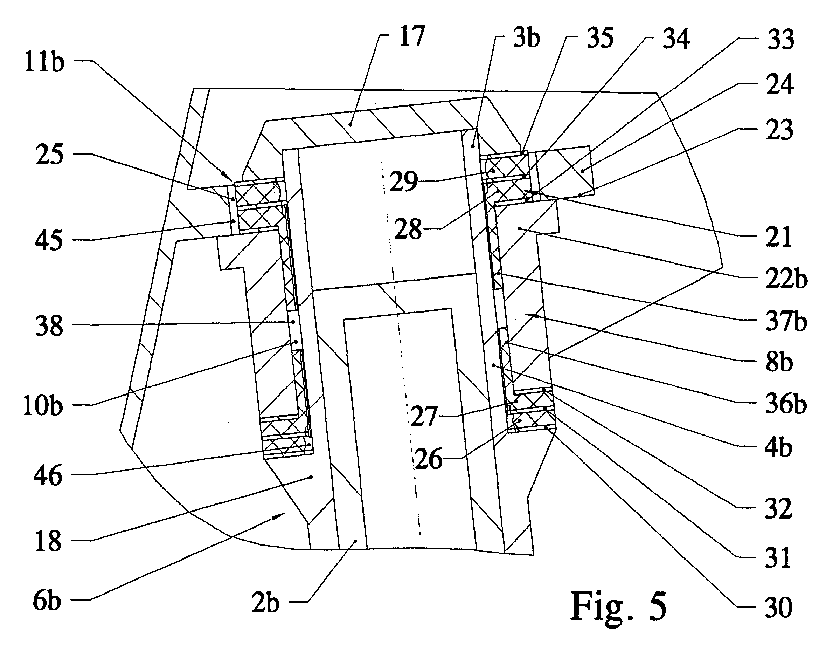

Bei der zweiten Ausführungsform gemäß den Fig. 4 und 5 ist das Gegenlager 8b von einer die Öffnung 10b aufweisenden Lagerbüchse 22b gebildet, die im Bereich ihres Umfangs an einer Unterseite 23 eines Supports 24 der Radaufhängung 7 befestigt ist und in der das Zylinderaußenronr 4b koaxial geführt ist, wobei der Support 24 ebenfalls eine Durchbrechung 25 aufweist, durch die das Ende 3b des Zylinderaußenrohrs 4b hindurchragen kann. Zur Verbindung des freien Endes des Kolbens 2b der Achsausgleichs-Zylinder-Kolben-Einheit 6b mit der Achsschwinge 41 ist eine Pleuelstange 43 vorgesehen, die einerseits am Kolben 2b und andererseits an der Achsschwinge 41 angelenkt ist und beim Ein- und Ausfedern der Achsschwinge 41 ein erforderliches Verschwenken der Anlenkung 42 der Pleuelstange an der Achsschwinge 41 relativ zur Anlenkung 44 der Pleuelstange 43 am Kolben 2b gewährleistet.
Sowohl die Lagerscheibe 22 als auch die Lagerbüchse 22b können jeweils mit dem Support 24 verschraubt oder anderweitig mit ihm fest verbunden sein.

Bei beiden Ausführungsbeispielen ist das Federungselement 11a bzw. sind die Federungsscheiben 20 und 21 mehrschichtig ausgebildet, und zwar ist die Mehrschichtigkeit von abwechselnden Lagen aus elastischem Material 26, 27, 28, 29 und Metall 30, 31, 32, 33, 34, 35 gebildet.

Die Schichten bzw. Lagen können durch Vulkanisation miteinander verbunden sein, wobei das elastische Material vorzugsweise Gummi und das Metall vorzugsweise Stahl ist. Auch kann das elastische Material durch Gewebe- oder Gewirklagen verstärkt sein (nicht gezeigt).

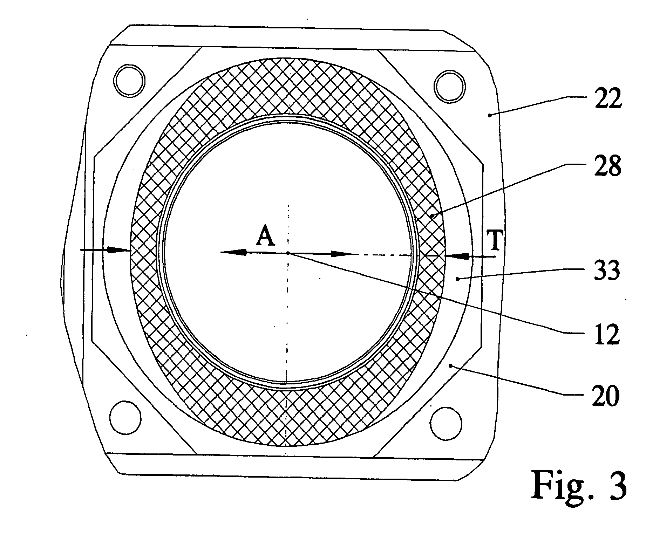

Vorzugsweise weisen die elastischen Schichten 26 bis 29 des Federungselements 11a bzw. der Federungsscheiben 20, 21 im Wesentlichen die Form von Ellipsen auf (Fig. 3). Dabei sind diese Ellipsen derart zwischen Gegenlager 8a, 8b und Zylinderaußenrohr 4a, 4b angeordnet, dass der jeweils kleinere Durchmesser der Ellipsen jeweils in Richtung der Schwenkbewegungen (siehe Doppelpfeil A in den Fig. 2 und 3) der Achsausgleichs-Zylinder-Kolben-Einheit 6a beim Ein- und Ausfedern der Radaufhängung 7 (siehe Federweg B in Fig. 1) gerichtet ist.

Die beiden Federungsscheiben 20, 21 ragen jeweils mit einander gegenüberliegenden Bunden 36 und 37 aus elastischem Material in den die Schwenkbewegungen des Endes 3a des Zylinderaußenrohrs 4a ermöglichenden Ringspalt 38 zwischen dem Ende 3a und dem Innenumfang der Öffnung 10a der Lagerscheibe 22.

Das Spiel zwischen der Außenfläche 19 des Zylinderaußenrohrs 4a und dem inneren Umfang der verschiedenen Schichten bzw. Lagen 26 bis 29 und 30 bis 35 nimmt von deren gemeinsamer Mittelebene 40 zu ihren jeweiligen Endflächen 38 und 39 hin zu.

Die weitere Ausgestaltung der zweiten Ausführungsform entspricht weitgehend derjenigen der ersten Ausführungsform gemäß den Fig. 1 bis 3, Dabei ist auch das Federungselement 11b mehrschichtig ausgebildet, wobei die Mehrschichtigkeit von abwechselnden Lagen aus elastischem Material 26, 27, 28, 29 und Metall 30, 31, 32, 33, 34, 35 gebildet ist. Die Schichten bzw. Lagen 26 bis 29 und 30 bis 35 können durch Vulkanisation miteinander verbunden sein, wobei als elastisches Material wiederum Gummi und als Metall wiederum Stahl bevorzugt wird. Auch kann das elastische Material durch Gewebe- oder Gewirklagen verstärkt sein.

Wiederum ragen als Federungselement 11b Federungsscheiben 20, 21 jeweils mit einander gegenüberliegenden Bunden 36, 37 aus elastischem Material in den Ringspalt 38 zwischen dem Ende 3b und dem Innenumfang der Öffnung 10b der Lagerbüchse 22b und füllen diesen Ringspalt 38 nicht vollständig aus. Dadurch kann sich elastisches Material der Federungsscheiben 21, 22 unter Druck in dem Ringspalt 38 einerseits und in die Öffnung 25, welche die Dämpfungsscheibe 21 vorteilhaft mit Spiel 45 umgibt, andererseits verlagern. Diesem Zweck dient auch ein Ringspalt 46 zwischen der Lage 26 der Federungsscheibe 20 und dem Zylinderaußenrohr 4b.

Es ist zu betonten, daß es sich bei den beiden beschriebenen Ausführungsbeispielen um bevorzugte Ausführungsformen handelt, die sich im Rahmen der Erfindung noch dadurch vereinfachen lassen, daß die jeweils obere Federungsscheibe 20 weggelassen wird, wo dies mechanisch vertretbar ist, was zu nicht gezeigten vereinfachten dritten und vierten Ausführungsbeispielen führt. Ist dabei die Mutter 17 eine Topfmutter, dann wird zweckmäßig eine axiale Höhe deren Gewindes gewählt, die der Bauhöhe der Topfmutter plus der Bauhöhe der oberen Federungsscheibe 21 in den oben beschriebenen ersten und zweiten Ausführungsformen im Wesentlichen entspricht. Natürlich lässt sich auch eine einfache Ringmutter verwenden, wenn das Ende der Zylinderaußenrohre 4a, 4b in üblicher Weise geschlossen ist. Deren axiale Bauhöhe kann erheblich geringer sein, da es ja nur von der Bauhöhe bzw. axialen Erstreckung des jeweiligen Außengewindes auf dem Ende 3a, 3b des Zylinderaußenrohrs 4a oder 4b abhängt, wie weit sich die Ringform aufweisende Mutter auf dieses Ende aufschrauben lässt, natürlich immer in Abhängigkeit von der Lage des Bundes 18 und der axialen Erstreckung der als Federungselement verwendeten unteren Federungsscheibe 21. Dies immer unter Berücksichtigung des Umstands, daß das Ende 3a, 3b erfindungsgemäß durch das Gegenlager 8a, 8b hindurch sich in den Raum oberhalb desselben erstrecken soll.

Im Falle der von der ersten Ausführungsform ausgehenden vereinfachten dritten Ausführungsform belässt man zweckmäßig einen axialen Abstand zwischen der Mutter 17 und dem Gegenlager 8a, um die Schwenkbewegung des Zylinderaußenrohrs 4a nach Maßgabe des Ein- und Ausfederns der Achsschwinge (41) der Radaufhängung (7) zu erleichtern. Dies bedeutet, daß bei dieser Ausführungsform eine Vorspannung des Federelements 11a bzw. der Federungsscheibe 21 entfällt.

Bei der von der zweiten Ausführungsform ausgehenden vereinfachten vierten Ausführungsform hingegen lässt sich die Mutter 17 am Gegenlager 8b in Form der Lagerbüchse 22b zur Erzielung von Vorspannung festziehen, da diese ja im Bereich ihres Umfangs an der Unterseite 23 des Supports 24 der Radaufhängung 7 starr befestigt ist.

## Patentansprüche

1. Lagerung (1) für das freie Ende einer Stützstrebe, wie des oberen Endes (3a, 3b) des Zylinderaußenrohrs (4a, 4b) einer Achsausgleichs-Zylinder-Kolben-Einheit (6a, 6b) der Radaufhängung (7) eines Achsaggregats für Fahrzeuge, wie eines Pendelachsaggregats für Schwerlastanhänger, welches Ende (3a, 3b) in einem Gegenlager (8a, 8b) der Radaufhängung (7), wie eines Drehgestells (14) des Achsaggregats, gehalten ist, während das freie Ende des Kolbens (2a, 2b) der Achsausgleichs-Zylinder-Kolben-Einheit (6a, 6b) an einer Achsschwinge (41) angelenkt ist,
**dadurch gekennzeichnet,**
**daß** das Zylinderaußenrohr (4a, 4b) mit seinem Ende (3a, 3b) durch eine Öffnung (10a, 10b) im Gegenlager (8a, 8b) gesteckt ist,
**daß** ein einerseits am Zylinderaußenrohr (4a, 4b) und andererseits am Gegenlager (8a, 8b) angreifendes und einen größeren Durchmesser als die Öffnung (10a, 10b) aufweisendes ringförmiges Federungselement (11a, 11b) auf das Zylinderaußenrohr aufgeschoben ist, das aus einer gelochten oberen Federungsscheibe (20) und einer gelochten unteren Federungsscheibe (21) besteht, deren eine oberhalb und deren andere unterhalb des Gegenlagers (8a, 8b) an demselben unter einer vom Zylinderaußenrohr (4a, 4b) ausgeübten Vorspannung anliegt und die jeweils ein elastisches Material aufweisen, und daß das Ende (3a, 3b) des Zylinderaußenrohrs (4a, 4b) gegen ein Herausrutschen aus der Öffnung (10a, 10b) gesichert ist.

2. Lagerung (1) nach Anspruch 1,
**dadurch gekennzeichnet,**
**daß** das Ende (3a, 3b) des Zylinderaußenrohrs (4a, 4b) ein Außengewinde aufweist, auf das eine Mutter (17) zur Halterung und Sicherung des Zylinderaußenrohrs (4a, 4b) gegen ein Herausrutschen aus der Öffnung (10a, 10b) des Gegenlagers (8a, 8b) aufgeschraubt ist, wobei die Mutter an der oberen Federungsscheibe anliegt und die genannte Vorspannung auf die Federungsscheiben (20, 21) und deren Anlage am Gegenlager (8a, 8b) ausübt.

3. Lagerung (1) nach Anspruch 2,
**dadurch gekennzeichnet,**
**daß** die Mutter (17) eine Topfmutter ist, welche die abschließende obere Stirnwand des Zylinderaußenrohrs (4a, 4b) bildet.

4. Lagerung (1) nach Anspruch 2 oder 3,
**dadurch gekennzeichnet,**
**daß** vor dem Aufschrauben der Topfmutter (17) die Federungsscheiben (20, 21) mit jeweils einer in ihrem Innendurchmesser dem Außendurchmesser des Zylinderaußenrohrs (4a, 4b) mit Spiel entsprechenden Durchbrechung unter Zwischenlage des Gegenlagers (8a, 8b) auf das Ende (3a, 3b) des Zylinderaußenrohrs (4a, 4b) aufgeschoben sind, und
**daß** im Abstand vom Ende (3a, 3b) ein einstückiger Bund (18) am Umfang des Zylinderaußenrohrs (4a, 4b) angeordnet ist, welcher ein Widerlager für die nach ihrem Aufschieben an der Unterseite des Gegenlagers (8a, 8b) anliegende untere Federungsscheibe (21) bildet.

5. Lagerung (1) nach Anspruch 6,
**dadurch gekennzeichnet,**
**daß** die zwei Federungselemente (20, 21) im Wesentlichen spiegelbildlich gleich geformt sind.

6. Lagerung (1) nach Anspruch 1,
**dadurch gekennzeichnet,**
**daß** das Gegenlager (8a) von einer die Öffnung (10a) aufweisenden Lagerscheibe (22) gebildet ist, die im Bereich ihres Umfangs an einer Unterseite (23) eines Supports (24) der Radaufhängung (7) befestigt ist, der seinerseits eine Durchbrechung (25) aufweist, durch die das Ende (3a) des Zylinderaußenrohrs (4a) ebenfalls hindurchragt, wobei die Durchbrechung (25) wie die Öffnung (10a) groß genug ist, um beim Ein- und Ausfedern der Achsschwinge (41) der Radaufhängung (7) und einem entsprechenden Verschwenken der Anlenkung (42) des freien Endes des Kolbens (2a) der Achsausgleichs-Zylinder-Kolben-Einheit (6a) die entsprechende Schwenkbewegungen des Endes (3a) des Zylinderaußenrohrs (4a) im Gegenlager (8a) zu gewährleisten.

7. Lagerung nach Anspruch 1,
**dadurch gekennzeichnet,**
**daß** das Gegenlager (8b) von einer die Öffnung (10b) aufweisenden Lagerbüchse (22b) gebildet ist, die im Bereich ihres Umfangs an einer Unterseite (23) eines Supports (24) der Radaufhängung (7) befestigt ist und in der das Zylinderaußenrohr (4b) koaxial geführt ist, wobei der Support (24) ebenfalls eine Durchbrechung (25) aufweist, durch die das Ende (3b) des Zylinderaußenrohrs (4b) hindurchragen kann, und
**daß** zur Verbindung des freien Endes des Kolbens (2b) der Achsausgleichs-Zylinder-Kolben-Einheit (6b) mit der Achsschwinge (41) eine Pleuelstange (43) vorgesehen ist, die einerseits am Kolben (2b) und andererseits an der Achsschwinge (41) angelenkt ist und beim Ein- und Ausfedern der Achsschwinge (41) ein erforderliches Verschwenken der Anlenkung (42) der Pleuelstange an der Achsschwinge (41) relativ zur Anlenkung (44) der Pleuelstange (43) am Kolben (2b) gewährleistet.

8. Lagerung nach Anspruch 6,
**dadurch gekennzeichnet,**
**daß** die Lagerscheibe (22) mit dem Support (24) verschraubt ist.

9. Lagerung nach Anspruch 7,
**dadurch gekennzeichnet,**
**daß** die Lagerbüchse (22b) mit dem Support (24) verschraubt ist.

10. Lagerung (1) nach einem der vorhergehenden Ansprüche,
**dadurch gekennzeichnet,**
**daß** das Federungselement (11a) mehrschichtig ausgebildet ist.

11. Lagerung (1) nach Anspruch 10,
**dadurch gekennzeichnet,**
**daß** die Mehrschichtigkeit von abwechselnden Lagen aus gummielastischem Material (26, 27, 28, 29) und Metall (30, 31, 32, 33, 34, 35) gebildet ist.

12. Lagerung (1) nach Anspruch 11,
**dadurch gekennzeichnet,**
**daß** die Schichten bzw. Lagen (26 bis 29 und 30 bis 35) durch Vulkanisation miteinander verbunden sind.

13. Lagerung (1) nach einem der vorhergehenden Ansprüche,
**dadurch gekennzeichnet,**
**daß** das elastische Material Gummi und das Metall Stahl sind.

14. Lagerung (1) nach einem der vorhergehenden Ansprüche,
**dadurch gekennzeichnet,**
**daß** das elastische Material durch Gewebe- oder Gewirklagen verstärkt ist.

15. Lagerung (1) nach Anspruch 1,
**dadurch gekennzeichnet,**
**daß** zumindest die elastischen Schichten (26 bis 29) des Federungselements (11a, 11b) im Wesentlichen die Form von Ellipsen aufweisen.

16. Lagerung (1) nach Anspruch 15,
**dadurch gekennzeichnet,**
**daß** diese Ellipsen derart zwischen Gegenlager (8a, 8b) und Zylinderaußenrohr (4a, 4b) angeordnet sind, dass der jeweils kleinere Durchmesser (T) der Ellipsen jeweils in Richtung der Schwenkbewegungen (Doppelpfeil A) der Achsausgleichs-Zylinder-Kolben-Einheit (6a, 6b) beim Ein- und Ausfedern der Achsschwinge (41) (siehe Federweg B) gerichtet ist.

17. Lagerung (1) nach Anspruch 6 oder 7,
**dadurch gekennzeichnet;**
**daß** die beiden Federungsscheiben (20, 21) jeweils mit einander gegenüberliegenden Bunden (36a, 37a; 36b, 37b) aus gummielastischem Material in den Ringspalt (38) zwischen dem Zylinderaußenrohr (4a, 4b) und dem Innenumfang der Öffnung (10a, 10b) der Lagerscheibe (22) oder der Lagerbüchse (22a) ragen.

18. Lagerung (1) nach Anspruch 5,
**dadurch gekennzeichnet,**
**daß** das Spiel zwischen der Außenfläche (19) des Zylinderaußenrohrs (4a, 4b) und den inneren Umfängen der verschiedenen Schichten bzw. Lagen (26 bis 29 und 30 bis 35) der Federungsscheiben (20, 21) von deren gemeinsamer Mittelebene (40) zu ihren jeweils einander abgewandten Endflächen (38, 39) hin zunimmt.

19. Lagerung (1) für das freie Ende einer Stützstrebe, wie des oberen Endes (3a, 3b) des Zylinderaußenrohrs (4a, 4b) einer Achsausgleichs-Zylinder-Kolben-Einheit (6a, 6b) der Radaufhängung (7) eines Achsaggregats für Fahrzeuge, wie eines Pendelachsaggregats für Schwerlastanhänger, welches Ende (3a, 3b) in einem Gegenlager (8a, 8b) der Radaufhängung (7), wie eines Drehgestells (14) des Achsaggregats, gehalten ist, während das freie Ende des Kolbens (2a, 2b) der Achsausgleichs-Zylinder-Kolben-Einheit (6a, 6b) an einer Achsschwinge (41) angelenkt ist,
**dadurch gekennzeichnet,**
**daß** das Zylinderaußenrohr (4a, 4b) mit seinem Ende (3a, 3b) durch eine Öffnung (10a, 10b) im Gegenlager (8a, 8b) gesteckt ist,
**daß** ein einerseits am Zylinderaußenrohr (4a, 4b) und andererseits am Gegenlager (8a, 8b) angreifendes und einen größeren Durchmesser als die Öffnung (10a, 10b) aufweisendes ringförmiges Federungselement (11a, 11b) auf das Zylinderaußenrohr aufgeschoben ist, das aus einer gelochten unteren Federungsscheibe (21) besteht, die unterhalb des Gegenlagers (8a, 8b) das Zylinderaußenrohr (4a, 4b) umgibt und ein elastisches Material aufweist, und daß das Ende (3a, 3b) des Zylinderaußenrohrs (4a, 4b) gegen ein Herausrutschen aus der Öffnung (10a, 10b) gesichert ist.

## Claims

1. A bearing (1) for the free end of a support strut, such as the upper end (3a, 3b) of the exterior cylinder pipe (4a, 4b) of a cylinder-piston axle compensation unit (6a, 6b) in the wheel suspension (7) of an axle assembly for vehicles, such as a pendulum axle assembly for heavy load trailers, in which the end (3a, 3b) is held by a counter bearing (8a, 8b) of the wheel suspension (7), such as a pivot mounting (14) of the axle assembly, whereas the free end of the piston (2a, 2b) of the cylinder-piston axle compensation unit (6a, 6b) is linked to an axle rocker (41),
**characterized in that**
the exterior cylinder pipe (4a, 4b) is inserted with its end (3a, 3b) through an opening (10a, 10b) in the counter bearing (8a, 8b),
and that a ring-shaped suspension element (11a, 11b), composed of a perforated upper suspension disk (20) and a perforated lower under suspension disk (21) that lie (one above and the other below) against the counter bearing (8a, 8b) under a pretension exerted by the exterior cylinder pipe (4a, 4b), and each of which comprises an elastic material, and exhibits a diameter larger than the opening (10a, 10b), and engages the exterior cylinder pipe (4a, 4b) on the one side and the counter bearing (8a, 8b) on the other side, is shifted onto the exterior cylinder pipe,
and that the end (3a, 3b) of the exterior cylinder pipe (4a, 4b) is secured against slipping out of the opening (10a, 10b).

2. The bearing (1) according to claim 1,
**characterized in that**
the end (3a, 3b) of the exterior cylinder pipe (4a, 4b) comprises an external thread, onto which a nut (17) is screwed to hold and secure the exterior cylinder pipe (4a, 4b) against slipping out of the opening (10a, 10b) of the counter bearing (8a, 8b), whereby the nut lies against the upper suspension disk and exercises the aforementioned pretension upon the suspension disks (20, 21) and their abutment at the counter bearing (8a, 8b).

3. The bearing (1) according to claim 2,
**characterized in that**
the nut (17) is a cap nut that forms the terminal upper facing wall of the exterior cylinder pipe (4a, 4b).

4. The bearing (1) according to claim 2 or 3,
**characterized in that**
before screwing on the cap nut (17), the suspension disks (20, 21), each with an opening corresponding with play in its interior diameter to the exterior diameter of the exterior cylinder pipe (4a, 4b), are shifted amidst intermediate placement of the counter bearing (8a, 8b) onto the end (3a, 3b) of the exterior cylinder pipe (4a, 4b),
and that a single-piece collar (18) is arranged upon the circumference of the exterior cylinder pipe (4a, 4b) at a distance from the end (3a, 3b), which collar forms a counter bearing for the lower suspension disk (21) once it is inserted to lie against the lower side of the counter bearing (8a, 8b).

5. The bearing (1) according to claim 6,
**characterized in that**
the two suspension elements (20, 21) are constructed essentially as identical mirror images.

6. The bearing (1) according to claim 1,
**characterized in that**
the counter bearing (8a) is formed by a bearing disk (22) comprising an opening (10a), which is fastened across the area of its circumference to the underside (23) of a support (24) of the wheel suspension (7), which in turn comprises a gap (25), through which the end (3a) of the exterior cylinder pipe (4a) also extends, whereby the gap (25) and the opening (10a) is large enough to ensure a corresponding swivel movement of the end (3a) of the exterior cylinder pipe (4a) in the counter bearing (8a) during the loading and releasing movement of the axle rocker (41) in the wheel suspension (7), and a corresponding swiveling of the linkage (42) of the free end of the piston (2a) in the cylinder-piston axle compensation unit (6a).

7. The bearing according to claim 1,
**characterized in that**
the counter bearing (8b) is formed by a bearing sleeve (22b) comprising an opening (10b) that is fastened in the area of its circumference to the underside (23) of a support (24) of the wheel suspension (7), and in which the exterior cylinder pipe (4b) is coaxially led, whereby the support (24) comprises a gap (25), through which the end (3b) of the exterior cylinder pipe (4b) can extend,
and that a main rod (43) is provided to connect the free end of the piston (2b) of the cylinder-piston axle compensation unit (6b) to the axle rocker (41), which main rod is linked at one end to the piston (2b) and at the other end to the axle rocker (41), and during loading and releasing movement of the axle rocker (41) warrants a necessary swiveling of the linkage (42) of the main rod to the axle rocker (41) relative to the linkage (44) of the main rod (43) to the piston (2b).

8. The bearing according to claim 6,
**characterized in that**
the bearing disk (22) is screwed onto the support (24).

9. The bearing according to claim 7,
**characterized in that**
the bearing sleeve (22b) is screwed onto the support (24).

10. The bearing (1) according to one of the previous claims,
**characterized in that**
the suspension element (11 a) is constructed of multiple layers.

11. The bearing (1) according to claim 10,
**characterized in that**
the multiple layers are constructed of alternating layers of rubber-elastic material (26, 27, 28, 29) and of metal (30, 31, 32, 33, 34, 35).

12. The bearing (1) according to claim 11,
**characterized in that**
the levels or layers (26 to 29 and 30 to 35) are joined to each other by vulcanization.

13. The bearing (1) according to one of the previous claims, **characterized in that**
the elastic material is rubber and the metal is steel.

14. The bearing (1) according to one of the previous claims,
**characterized in that**
the elastic material is reinforced by woven or knitted layers.

15. The bearing (1) according to claim 1,
**characterized in that**
at least the elastic layers (26 to 29) of the suspension element (11 a, 11b) exhibit essentially the shape of ellipses.

16. The bearing (1) according to claim 15,
**characterized in that**
these ellipses are arranged in such a manner between the counter bearing (8a, 8b) and the exterior cylinder pipe (4a, 4b) that the respectively smaller diameter (T) of the ellipses is pointed along the direction of the pivoting movements (double arrow A) of the cylinder-piston axle compensation unit (6a, 6b) during the loading and releasing movement of the axle rocker (41) (see suspension path B).

17. The bearing (1) according to claim 6 or 7,
**characterized in that**
each of the two suspension disks (20, 21) extend into the ring gap (38) between the exterior cylinder pipe (4a, 4b) and the inner circumference of the opening (10a, 10b) in the bearing disk (22) or the bearing sleeve (22a) with collars (36a, 37a; 36b, 37b) of elastic rubber material lying opposite one another.

18. The bearing (1) according to claim 5,
**characterized in that**
the play between the external surface (19) of the exterior cylinder pipe (4a, 4b) and the inner circumferences of the various levels or layers (26 to 29 and 30 to 35), resp., of the suspension disks (20, 21) increases from their common midplane (40) to the respective end surfaces (38, 39) facing away from one another.

19. A bearing (1) for the free end of a support strut, such as the upper end (3a, 3b) of the exterior cylinder pipe (4a, 4b) of a cylinder-piston axle compensation unit (6a, 6b) in the wheel suspension (7) of an axle assembly for vehicles, such as a pendulum axle assembly for heavy load trailers, which end (3a, 3b) is held in a counter bearing (8a, 8b) of the wheel suspension (7), such as a pivot mounting (14) in the axle assembly, whereas the free end of the piston (2a, 2b) of the cylinder-piston axle compensation unit (6a, 6b) is linked to an axle rocker (41),
**characterized in that**
the exterior cylinder pipe (4a, 4b) is inserted with its end (3a, 3b) through an opening (10a, 10b) in the counter bearing (8a, 8b),
that a ring-shaped suspension element (11a, 11b), composed of a perforated lower suspension disk (21) that comprises an elastic material and surrounds the exterior cylinder pipe (4a, 4b) below the counter bearing (8a, 8b), and exhibits a diameter larger than the opening (10a, 10b), and engages the exterior cylinder pipe (4a, 4b) on the one side and the counter bearing (8a, 8b) on the other side, is shifted onto the exterior cylinder pipe,
and that the end (3a, 3b) of the exterior cylinder pipe (4a, 4b) is secured against slipping out of the opening (10a, 10b).

## Revendications

1. Palier (1) pour l'extrémité libre d'une jambe d'appui, telle que l'extrémité supérieure (3a, 3b) du tube cylindrique extérieur (4a, 4b) d'une unité d'équilibrage d'essieu à piston-cylindre (6a, 6b) de la suspension de roue (7) d'un agrégat d'essieu pour véhicule, tel qu'un agrégat d'essieu oscillant pour remorque de poids lourd, ladite extrémité (3a, 3b) étant maintenue dans une butée (8a, 8b) de la suspension de roue (7), telle qu'un bogie (14) de l'agrégat d'essieu, alors que l'extrémité libre du piston (2a, 2b) de l'unité d'équilibrage d'essieu à piston-cylindre (6a, 6b) est articulée à une coulisse d'essieu (41),
**caractérisé**
**en ce que** le tube cylindrique extérieur (4a, 4b) est engagé par son extrémité (3a, 3b) dans une ouverture (10a, 10b) de la butée (8a, 8b),
**en ce qu'**un élément (11a, 11b) de suspension annulaire ayant prise sur le tube cylindrique extérieur (4a, 4b) d'une part, et sur la butée (8a, 8b) d'autre part, et ayant un diamètre supérieur à l'ouverture (10a, 10b), est monté sur le tube cylindrique extérieur, et se compose d'une rondelle élastique supérieure (20) perforée et d'une rondelle élastique inférieure (21) perforée, dont la première repose au-dessus, et l'autre en dessous de la butée (8a, 8b) sous une précontrainte exercée par le tube cylindrique extérieur (4a, 4b), lesdites rondelles étant respectivement constituées d'un matériau élastique, et en ce que l'extrémité (3a, 3b) du tube cylindrique extérieur (4a, 4b) est empêchée de glisser hors de l'ouverture (10a, 10b).

2. Palier (1) selon la revendication 1,
**caractérisé**
**en ce que** l'extrémité (3a, 3b) du tube cylindrique extérieur (4a, 4b) est pourvue d'un filet extérieur, sur lequel est vissé un écrou (17) pour le maintien et la fixation du tube cylindrique extérieur (4a, 4b) contre un glissement hors de l'ouverture (10a, 10b) de la butée (8a, 8b), l'écrou reposant contre la rondelle élastique supérieure et exerçant ladite pré-contrainte sur les rondelles élastiques (20, 21) et leur appui contre la butée (8a, 8b).

3. Palier (1) selon la revendication 2,
**caractérisé**
**en ce que** l'écrou (17) est un écrou-chapeau qui forme la paroi frontale terminale supérieure du tube cylindrique extérieur (4a, 4b).

4. Palier (1) selon la revendication 2 ou la revendication 3,
**caractérisé**
**en ce qu'**avant vissage de l'écrou-chapeau (17), les rondelles élastiques (20, 21) sont montées sur l'extrémité (3a, 3b) du tube cylindrique extérieur (4a, 4b), par une perforation respective correspondant par son diamètre intérieur au diamètre extérieur du tube cylindrique extérieur (4a, 4b), avec jeu, la butée (8a, 8b) étant intercalée, et
**en ce qu'**un épaulement (18) mono-étagé espacé de l'extrémité (3a, 3b) est disposé sur le contour du tube cylindrique extérieur (4a, 4b), lequel forme une contrebutée pour la rondelle élastique (21) inférieure reposant contre la face inférieure de la butée (8a, 8b) après montage.

5. Palier (1) selon la revendication 6,
**caractérisé**
**en ce que** les deux éléments de suspension (20, 21) présentent des formes sensiblement inversées.

6. Palier (1) selon la revendication 1,
**caractérisé**
**en ce que** la butée (8a) est formée par une rondelle de palier (22) comportant l'ouverture (10a), laquelle est fixée, dans la zone de sa périphérie, contre une face inférieure (23) d'un support (24) de la suspension de roue (7), lequel comporte lui-même une perforation (25) par laquelle passe également l'extrémité (3a) du tube cylindrique extérieur (4a), la perforation (25) ainsi que l'ouverture (10a) étant suffisamment grandes pour assurer les mouvements de pivotement correspondants de l'extrémité (3a) du tube cylindrique extérieur (4a) dans la butée (8a), lors de l'oscillation en va-et-vient de la coulisse d'essieu (41) de la suspension de roue (7) et d'un pivotement correspondant de l'articulation (42) de l'extrémité libre du piston (2a) de l'unité d'équilibrage d'essieu à piston-cylindre (6a).

7. Palier selon la revendication 1,
**caractérisé**
**en ce que** la butée (8b) est formée par un coussinet de palier (22b) comportant l'ouverture (10b), laquelle est fixée, dans la zone de sa périphérie, contre une face inférieure (23) d'un support (24) de la suspension de roue (7), et par laquelle le tube cylindrique extérieur (4b) est coaxialement inséré, le support (24) comportant également une perforation (25) par laquelle peut passer l'extrémité (3b) du tube cylindrique extérieur (4b), et
**en ce qu'**une bielle (43) est prévue pour relier l'extrémité libre du piston (2b) de l'unité d'équilibrage d'essieu à piston-cylindre (6b) à la coulisse d'essieu (41), laquelle est articulée au piston (2b) d'une part, et à la coulisse d'essieu (41) d'autre part, et assure un pivotement exigé de l'articulation (42) de la bielle sur la coulisse d'essieu (41) par rapport à l'articulation (44) de la bielle (43) sur le piston (2b), lors de l'oscillation en va-et-vient de la coulisse d'essieu (41).

8. Palier selon la revendication 6,
**caractérisé**
**en ce que** la rondelle de palier (22) est vissée au support (24).

9. Palier selon la revendication 7,
**caractérisé**
**en ce que** le coussinet de palier (22b) est vissé au support (24).

10. Palier selon l'une des revendications précédentes,
**caractérisé**
**en ce que** l'élément de suspension (11a) est constitué de plusieurs couches.

11. Palier (1) selon la revendication 10,
**caractérisé**
**en ce que** la pluralité de couches est formée par une alternance de strates en matériau ayant l'élasticité du caoutchouc (26, 27, 28, 29) et en métal (30, 31, 32, 33, 34, 35).

12. Palier (1) selon la revendication 11,
**caractérisé**
**en ce que** les couches ou strates (26 à 29 et 30 à 35) sont liées par vulcanisation.

13. Palier (1) selon l'une des revendications précédentes,
**caractérisé**
**en ce que** le matériau élastique est du caoutchouc, et le métal de l'acier.

14. Palier (1) selon l'une des revendications précédentes,
**caractérisé**
**en ce que** le matériau élastique est renforcé de couches de tissu ou d'étoffe de bonneterie.

15. Palier (1) selon la revendication 1,
**caractérisé**
**en ce qu'**au moins les couches élastiques (26 à 29) de l'élément (11a, 11b) de suspension présentent sensiblement une forme d'ellipse.

16. Palier (1) selon la revendication 15,
**caractérisé**
**en ce que** lesdites ellipses sont disposées entre la butée (8a, 8b) et le tube cylindrique extérieur (4a, 4b) de telle manière que le diamètre inférieur (T) des ellipses soit orienté dans la direction des mouvements de pivotement (flèche double A) de l'unité d'équilibrage d'essieu à piston-cylindre (6a, 6b) lors de l'oscillation en va-et-vient de la coulisse d'essieu (41) (voir le débattement B).

17. Palier (1) selon la revendication 6 ou la revendication 7,
**caractérisé**
**en ce que** les deux rondelles élastiques (20, 21) pénètrent chacune, par des épaulements (36a, 37a ; 36b, 37b) opposés l'un à l'autre et en matériau ayant l'élasticité du caoutchouc, dans la fente annulaire (38) entre le tube cylindrique extérieur (4a, 4b) et le contour intérieur de l'ouverture (10a, 10b) de la rondelle de palier (22) ou du coussinet de palier (22a).

18. Palier (1) selon la revendication 5,
**caractérisé**
**en ce que** le jeu entre la surface extérieure (19) du tube cylindrique extérieur (4a, 4b) et les contours intérieurs des différentes couches ou strates (26 à 29 et 30 à 35) des rondelles élastiques (20, 21) augmente progressivement entre leur plan médian (40) commun et leurs surfaces d'extrémité (38, 39) éloignées l'une de l'autre.

19. Palier (1) pour l'extrémité libre d'une jambe d'appui, telle que l'extrémité supérieure (3a, 3b) du tube cylindrique extérieur (4a, 4b) d'une unité d'équilibrage d'essieu à piston-cylindre (6a, 6b) de la suspension de roue (7) d'un agrégat d'essieu pour véhicule, tel qu'un agrégat d'essieu oscillant pour remorque de poids lourd, ladite extrémité (3a, 3b) étant maintenue dans une butée (8a, 8b) de la suspension de roue (7), telle qu'un bogie (14) de l'agrégat d'essieu, alors que l'extrémité libre du piston (2a, 2b) de l'unité d'équilibrage d'essieu à piston-cylindre (6a, 6b) est articulée à une coulisse d'essieu (41),
**caractérisé**
**en ce que** le tube cylindrique extérieur (4a, 4b) est engagé par son extrémité (3a, 3b) dans une ouverture (10a, 10b) de la butée (8a, 8b),
**en ce qu'**un élément (11a, 11b) de suspension annulaire ayant prise sur le tube cylindrique extérieur (4a, 4b) d'une part, et sur la butée (8a, 8b) d'autre part, et ayant un diamètre supérieur à l'ouverture (10a, 10b), est monté sur le tube cylindrique extérieur, et se compose d'une rondelle élastique inférieure (21) perforée entourant le tube cylindrique extérieur (4a, 4b) en dessous de la butée (8a, 8b) et constituée d'un matériau élastique, et en ce que l'extrémité (3a, 3b) du tube cylindrique extérieur (4a, 4b) est empêchée de glisser hors de l'ouverture (10a, 10b).
